# FASCICULE DE BREVET EUROPEEN

(11) **EP 3 202 637 B1**
(45) Date de publication et mention de la délivrance du brevet: **27.06.2018**
(21) Numéro de dépôt: 16199099.9
(22) Date de dépôt: 16.11.2016
(51) Int. Cl.: B62B 5/06

(54) **CONTENEUR ROULANT A POIGNEE DEPLOYABLE INCLINABLE ET VERROUILLABLE**
ROLLBEHÄLTER MIT AUSKLAPPBAREM NEIGBAREN UND VERRIEGELBAREN GRIFF
WHEELED CONTAINER WITH DEPLOYABLE, TILTABLE AND LOCKABLE HANDLE

(30) Priorité: 05.02.2016 FR 1650924
(43) Date de publication de la demande: 09.08.2017
(73) Titulaire: Saint Jean, 26100 Romans sur Isere (FR)
(72) Inventeur: GUILLON, Joël, 26260 Saint Donat sur L'Herbasse (FR)
(74) Mandataire: Prugneau, Philippe

(56) Documents cités:
- FR-A1- 2 987 592
- US-A- 6 073 737
- US-A1- 2009 315 284

## Description

### Domaine technique

L'invention concerne un conteneur roulant pour le transport et le déchargement d'une matière, comprenant un bac ouvert sur le dessus et une poignée qui est rétractable et extensible par rapport à une face frontale du bac entre une position basse rétractée et une position haute d'extension.

### Technique antérieure

Les conteneurs sont généralement utilisées par des opérateurs pour le chargement, le transport et le déchargement de matières diverses telles que celles utilisées dans l'industrie agro-alimentaire.

Les conteneurs comportent classiquement un bac qui peut être ouvert sur le dessus et qui est monté sur roulettes pour faciliter le déplacement des matières d'un point à un autre.

Pour éviter aux opérateurs de se pencher pour pousser ou tirer les conteneurs, ceux-ci sont équipés d'une poignée escamotable entre une position rétractée dans laquelle la poignée est en position basse rétractée par rapport à la surface supérieure du bac et une position haute d'extension dans laquelle elle est en saillie par rapport à la surface supérieure du bac.

Lorsque les conteneurs sont tractés avec la poignée en position d'extension, de façon verticale, c'est-à-dire perpendiculairement par rapport au sol, il a été relevé que les opérateurs prenaient une mauvaise posture qui peut induire des troubles musculo-squelettiques.

De plus, dans l'industrie agro-alimentaire, pour être déchargés les bacs doivent souvent être surélevés à l'aide d'un élévateur, basculés ou complètement renversés au dessus d'une machine fermée généralement par un couvercle comme une trémie.

Au cours des opérations de déchargement de la matière contenue dans le bac, la poignée escamotable est connue comme pouvant être un obstacle au levage et au retournement du conteneur car une poignée en saillie peut par exemple heurter le couvercle de la machine.

De plus, il est connue qu'une poignée escamotable peut se déployer toute seule au cours du basculement ou retournement du conteneur si elle n'est pas convenablement verrouillée en position basse rétractée.

Lors des opérations de nettoyage des bacs dans des machines à laver industrielles, les conteneurs sont aussi basculés ou retournés pour être convenablement lavés. Une poignée déployée ou le déploiement intempestif de la poignée peut aussi gêner l'opération de nettoyage. Document US6073737 décrit un conteneur avec toutes les caractéristiques de la préambule de la revendication 1. Enfin, les industriels cherchent à faciliter et simplifier les passages entre une position rétractée et une position d'extension et à nouveau dans une position rétractée d'une poignée d'un conteneur au cours de la manutention du conteneur, pour ne pas complexifier les taches d'un opérateur et optimiser son rendement.

Ils cherchent aussi à assurer un maintien de la poignée de façon sécurisée dans les différentes positions et notamment au cours du retournement du conteneur.

### Exposé de l'invention

Le but de l'invention est de proposer un conteneur avec une poignée escamotable pratique d'utilisation et verrouillable en position rétractée.

A cet effet, l'invention a pour objet un conteneur roulant pour le transport et le déchargement d'une matière, comprenant un bac ouvert sur le dessus et une poignée qui est rétractable et extensible par rapport à une face frontale du bac entre une position basse rétractée et une position haute d'extension, caractérisé en ce qu'il comprend une barre en forme de rectangle avec deux grands cotés et deux petits cotés, les deux grands côtés de la barre rectangle passant chacun à travers une patte agencée sur la face frontale du bac et formant deux premières encoches en opposition plus ou moins éloignées de la face frontale du bac, les deux petits côtés de la barre rectangle comprenant un premier petit coté constituant la poignée et un second petit coté qui est mobile dans une fente de coulissement agencée sur la face frontale du bac, cette fente de coulissement ayant une première extrémité basse qui est oblique par rapport à la face frontale du bac et une seconde extrémité haute qui forme deux secondes encoches en opposition plus ou moins éloignées de la face frontale du bac de telle sorte que la poignée, en position haute d'extension, est conçue pour avoir d'une part, deux positions d'extension décalées angulairement l'une par rapport à l'autre avec une première position d'extension où la barre rectangle est sensiblement verticale selon laquelle le second petit côté de la barre rectangle est positionné dans une seconde encoche qui est la plus éloignée de la face frontale du bac et les grands côtés de la barre rectangle sont positionnés chacun dans une première encoche qui est la plus éloignée de la face frontale du bac, une seconde position d'extension où la barre rectangle est sensiblement oblique selon laquelle le second petit côté de la barre rectangle est positionné dans une seconde encoche qui est la plus proche de la face frontale du bac et les grands côtés de la barre rectangle sont positionnés chacun dans la première encoche qui est la plus éloignée de la face frontale du bac, et d'autre part deux positions rétractées qui sont décalées angulairement l'une par rapport à l'autre avec une première position rétractée où la barre rectangle est sensiblement verticale selon laquelle le second petit côté de la barre rectangle est positionné au fond de la première extrémité basse de la fente et les grands côtés de la barre rectangle sont positionnés chacun dans une première encoche qui est la plus proche de la face frontale du bac, une seconde position rétractée où la barre rectangle est sensiblement oblique selon laquelle le second petit côté de la barre rectangle est positionné au fond de la première extrémité basse de la fente et les grands côtés de la barre rectangle sont positionnés chacun dans la première encoche qui est la plus éloignée de la face frontale du bac.

Le conteneur selon l'invention peut avantageusement présenter les particularités suivantes.
- la barre rectangle est une barre tubulaire et comporte sur les deux grands cotés une section aplatie adjacente à une rondelle de blocage, la section aplatie de la barre rectangle coopérant avec la première encoche qui est la plus proche de la face frontale du bac et qui est droite pour réaliser un verrouillage par friction de la barre rectangle occupant la première position rétractée ;
- une couronne à gorge est disposée sur le second petit coté de la barre rectangle pour coopérer avec un bord de la fente de coulissement.
- la seconde encoche la plus proche de la face frontale du bac est plus ouverte que la seconde encoche la plus éloignée de la face frontale du bac.

### Présentation sommaire des dessins

La présente invention sera mieux comprise et d'autres avantages apparaîtront à la lecture de la description détaillée du mode de réalisation pris à titre d'exemple nullement limitatif et illustré par les dessins annexés, dans lesquels :
- les figures 1A, 1B et 1C sont des vues schématiques illustrant un conteneur selon l'invention respectivement en position d'attente avec une poignée en position basse, et en déplacement tiré ou poussé par un opérateur avec la poignée en position haute.
- les figures 2A et 2B sont des vues schématiques illustrant un conteneur selon l'invention respectivement en élévation sur un élévateur et en déchargement par basculement ;
- les figures 3A et 3B sont des vues en perspective du conteneur selon l'invention avec la poignée dans une première position basse rétractée ;
- les figures 4A et 4B sont des vues en perspective du conteneur selon l'invention avec la poignée dans une seconde position haute d'extension lors du déplacement du conteneur tiré par un opérateur ;
- les figures 5A et 5B sont des vues en perspective du conteneur selon l'invention avec la poignée dans une première position haute d'extension lors du déplacement du conteneur poussé par un opérateur ;
- les figures 6A et 6B sont des vues en perspective du conteneur selon l'invention avec la poignée dans une première position basse rétractée sécurisée pour basculer/retourner le conteneur.

### Description des modes de réalisation

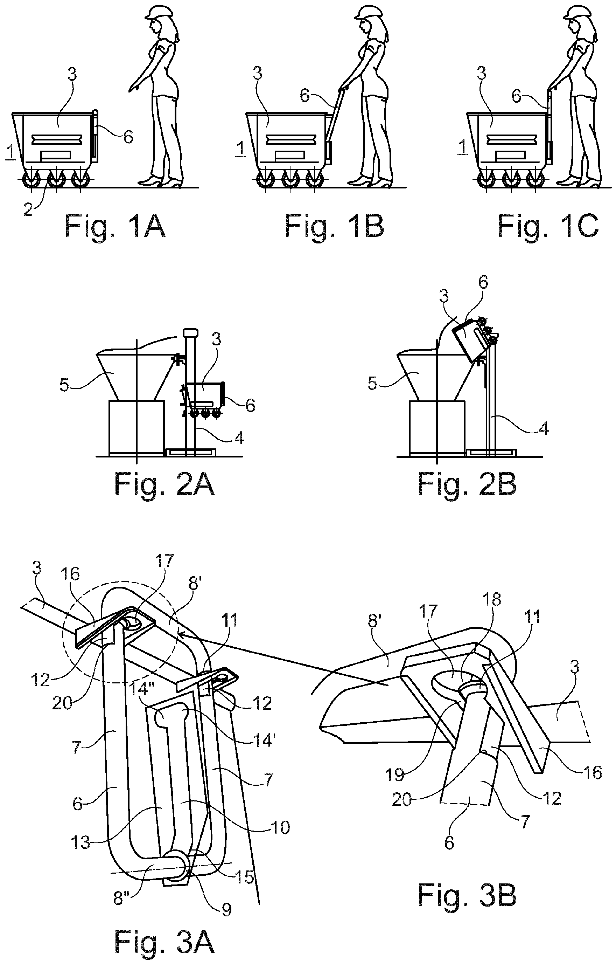

L'invention porte sur un conteneur 1 telle qu'illustré que les figures 1 à 6 à roulettes 2 pour déplacer des matières chargées dans une cuve ou bac 3 d'un point à un autre pouvant être espacés de plusieurs dizaines de mètres, et pour notamment décharger les matières du bac 3 à l'aide d'un élévateur 4 de sorte que le conteneur 1 surélevé puisse être basculé ou retourné afin d'être vidé au dessus d'un récipient 5 ou trémie appartenant par exemple à une machine pour mélanger différentes matières.

Sans restreindre la portée de l'invention, le bac 3 peut être ouvert sur le dessus ou fermé par un couvercle amovible (non représenté). Il peut être de forme carrée ou bien rectangulaire.

De même, le bac 3 peut être conçu en plastique, acier, aluminium, séparément ou par combinaison ou avec tout autre matériau adapté.

Le bac 3 selon l'invention présente une barre rectangle 6 qui est conçue pour être rétractée vers le bas (figures 1A, 3A et 3B) par rapport à la face frontale du bac 3 et pour être déployée vers le haut (figures 1B, 1C, 4A, 4B, 5A, 5B) en saillie au dessus du bac 3.

La barre rectangle 6, ici tubulaire présente deux grands cotés 7 et deux petits cotés 8', 8", le premier petit côté 8' formant une poignée de préhension pour la manipulation du conteneur 1.

Le second petit coté 8" présente ici globalement en son milieu une couronne à gorge 9 destinée à coulisser sur le bord d'une fente 10 agencée sur la face frontale du bac 3, comme décrit plus loin.

Les deux grands cotés 7 de la barre rectangle 6 présentent ici une butée sous forme d'une rondelle 11 de blocage.

En dessous de la rondelle 11, les grands cotés 7 présentent chacun une section aplatie 12 de verrouillage adjacente à la rondelle 11, la section aplatie 12 s'étendant perpendiculaire au plan de la barre rectangle 6.

La fente 10 de coulissement est formée ici dans un plat 13 perpendiculaire au plan de la barre rectangle 6. La fente 10 présente une extrémité basse avec une portion oblique 15 qui va en se rapprochant vers le bac 3 et une extrémité haute qui définit deux encoches 14', 14" en opposition plus ou moins éloignées de la face frontale du bac 3.

La largeur de la fente 10 est légèrement plus grande que le diamètre de la gorge de la couronne à gorge 9 de sorte à empêcher la couronne à gorge 9 de sortir de la fente 10 de coulissement.

Comme visibles sur les figures, les deux grands côtés 7 de la barre rectangle 6 traversent respectivement deux pattes 16 fixées à la surface frontale du bac 3 et qui définissent respectivement deux orifices 17 ici en forme de trou de serrure, chaque orifice définissant une encoche ronde 18 et une encoche plate 19 contigüe à l'encoche ronde 18, l'encoche plate 19 étant plus proche de la face frontale du bac 3 que l'encoche ronde 18.

Selon l'invention, lorsque la poignée 6 est en position basse rétractée comme illustrée sur les figures 1A, 3A et 3B, la couronne à gorge 9 est logée au fond de la portion oblique 15 de la fente 10.

Les rondelles 11 de blocage de la poignée 6 reposent sur le dessus des pattes 16.

Les sections aplaties 12 des grands côtés 7 de la barre rectangle 6 ont une longueur légèrement supérieure à l'épaisseur des pattes 16 et se terminent pas un épaulement 20 du coté opposé à la rondelle 11.

Les sections aplaties 12 ont une épaisseur légèrement inférieure à la largeur des encoches plates 19 pour pouvoir réaliser un verrouillage en position basse rétractée par friction des grands côtés 7 de la barre rectangle 6.

Par ailleurs le diamètre des deux grands cotés 7 de la barre rectangle 6 ici tubulaire et l'épaisseur des sections aplaties 12, sont inférieurs au diamètre des encoches rondes 18 de sorte à permettre un coulissement des grands côtés 7 de la barre rectangle 6 dans les encoches rondes 18 et donc le passage de la barre rectangle 6 de la position rétractée vers le bas vers la position déployée vers le haut et inversement.

Selon l'invention, la barre rectangle 6 peut occuper deux positions rétractées vers le bas et deux positions déployées vers le haut.

Dans une position rétractée vers le bas, le second petit côté 8" de la barre rectangle 6 et donc la couronne à gorge 9, est disposé dans le fond de la portion oblique 15 de la fente 10 et les grands côtés 7 (la section aplatie 12) de la barre rectangle 6 sont engagés dans les encoches plates 19. Dans cette position, la barre rectangle 6 est verrouillée en position sensiblement verticale et est empêchée de se déployer notamment si le container 1 est retourné ou basculé.

Si la poignée 8' est tirée vers l'avant du bac 3, les grands côtés 7 de la barre rectangle 6 viennent alors dans les encoches rondes 18 et de se fait sont en quelque sorte déverrouillés des encoches plates 19, cette position des grands côtés 7 dans les encoches rondes 18 des pattes 16 correspondant à une autre position rétractée de la barre rectangle 6 qui est décalée angulairement de la première position rétractée en étant inclinée vers l'avant du bac 3.

A partir de cette position rétractée vers le bas en étant inclinée vers l'avant, la poignée 8' peut être tirée vers le haut, en position déployée ou d'extension, les grands côtés 7 de la barre rectangle 6 coulissant dans les encoches rondes 18 des pattes 16 et la couronne à gorge 9 coulissant vers le haut dans la fente 10 jusqu'à venir se loger dans l'encoche 14" en forme d'arc de cercle la plus proche de la face frontale du bac 3.

La barre rectangle 6 occupe alors une position d'extension vers le haut au-dessus du bac 3 tout en étant inclinée vers l'avant (en oblique par rapport à la face frontale du bac 3). La barre rectangle 6 est stable dans cette position du fait que l'encoche 14" est assez profonde donc peu ouverte.

Dans cette position d'extension vers le haut de la barre rectangle 6, la poignée 8' peut être tirée vers l'avant du bac 3 ce qui permet de tirer le bac 3.

Si maintenant, la poignée 8' est poussée vers l'arrière du bac 3, c'est à dire que la barre rectangle 6 est amenée dans une position sensiblement verticale, la couronne à gorge 9 vient alors se loger dans l'encoche 14' en forme d'arc de cercle la plus éloignée de la face frontale du bac 3. L'encoche 14' est plus ouverte (moins profonde) que l'encoche 14".

Dans cette position de la barre rectangle 6, la poignée 8' peut être poussée en direction de l'arrière du bac 3 ce qui permet de pousser le bac 3.

Si maintenant la poignée 8' est lâchée, la barre rectangle 6 revient par simple gravité vers sa position basse inclinée vers l'avant, les rondelles 11 venant en butée sur le dessus des encoches rondes 18 des pattes 16.

Maintenant, si la poignée 8' est poussée vers l'arrière du bac 3, les sections aplaties 12 des grands côtés 7 viennent s'engager dans les encoches plates 19 des pattes 16 et sont bloqués en mouvement vertical en plus par les rondelles 11 et les épaulements 20.

Par conséquent, en pratique, sur la figure 1A, la barre rectangle est globalement en position rétractée vers le bas et est verrouillée dans les encoches plates 19.

Si l'opérateur souhaite déplacer le conteneur 1, il tire la poignée 8' vers l'avant puis ensuite vers le haut. Sur la figure 1B, la barre rectangle 6 est en position d'extension vers le haut et est inclinée vers l'avant. L'opérateur peut tirer le container 1 vers l'avant.

Si la poignée 8' est poussée vers l'arrière, comme montré sur la figure 1C, le conteneur est alors déplacé vers l'arrière.

Comme illustré sur les figures 2A, 2B, le conteneur 1 peut être déchargé de son contenu en étant par exemple mis en place sur l'élévateur 4. Pour ne pas que la barre rectangle 6 interfère avec l'opération de déchargement, l'opérateur arrange la barre rectangle 6 en position basse rétractée et verrouillée.

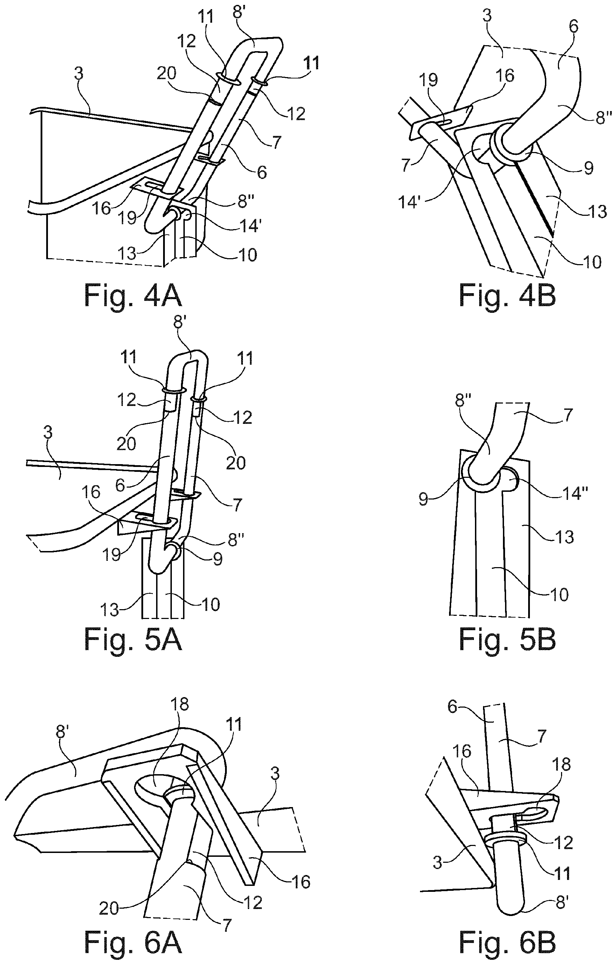

Le conteneur 1 est alors élevé comme illustré sur la figue 2A puis basculé comme illustré sur la figure 2B ou complètement retourné. La figure 6B illustre l'épaulement 20 qui repose alors sur les pattes 16 au-dessus des rondelles 11.

Selon l'invention, en laissant un jeu suffisant entre l'épaisseur des sections aplaties 12 et la largeur des encoches plates 19, si l'opérateur oublie d'arranger la barre rectangle 6 en position basse rétractée et verrouillée avant de décharger le conteneur 1 de son contenu, lors du basculement du bac illustré sur la figure 2B, les grands côtés 7 de la barre rectangle 6, en position rétractée passe automatiquement par gravité en position verrouillée dans les encoches plates 19. De la même manière, après déchargement du contenu du conteneur 1, lors du retour du bac 3 en position verticale, la barre rectangle 6 en position basse rétractée verrouillée reviendra automatiquement par gravité en position basse rétractée déverrouillée, les grands côtés 7 de la barre rectangle 6 venant dans les encoches rondes 18 des pattes 16.

On notera que pour assurer un nettoyage efficace du bac 3, le conteneur 1 peut aussi être installé sur une machine à laver opérant aussi un basculement ou un retournement du conteneur 1. Ainsi, comme expliqué précédemment, afin que la barre rectangle 6 n'interfère pas dans l'opération de lavage avec des éléments rotatifs de machines à laver automatiques, la barre rectangle 6 doit être maintenue sécurisée en position basse rétractée et verrouillée. L'endommagement de la machine ou le blocage du cycle de fonctionnement de la machine sont ainsi évités.

Il va de soi que la présente invention ne saurait être limitée à la description qui précède du mode de réalisation, susceptible de subir quelques modifications sans pour autant sortir du cadre de l'invention.

## Revendications

1. Conteneur (1) roulant pour le transport et le déchargement d'une matière, comprenant un bac (3) ouvert sur le dessus et une poignée (6) qui est rétractable et extensible par rapport à une face frontale du bac (3) entre une position basse rétractée et une position haute d'extension, le conteneur (1) comprend une barre (6) en forme de rectangle avec deux grands cotés (7) et deux petits cotés (8', 8"), **caractérisé en ce que** lesdits deux grands côtés (7) de ladite barre rectangle passant chacun à travers une patte (16) agencée sur ladite face frontale du bac (3) et formant deux premières encoches (18, 19) en opposition plus ou moins éloignées de ladite face frontale du bac (3), lesdits deux petits côtés (8', 8") de la barre rectangle (6) comprenant un premier petit coté (8') constituant ladite poignée et un second petit coté (8") qui est mobile dans une fente (10) de coulissement agencée sur ladite face frontale du bac (3), cette fente (10) de coulissement ayant une première extrémité basse (15) qui est oblique par rapport à ladite face frontale du bac (3) et une seconde extrémité haute qui forme deux secondes encoches (14', 14") en opposition plus ou moins éloignées de ladite face frontale du bac (3) de telle sorte que ladite poignée (6), en position haute d'extension, est conçue pour avoir d'une part, deux positions d'extension décalées angulairement l'une par rapport à l'autre avec une première position d'extension où ladite barre rectangle (6) est sensiblement verticale selon laquelle ledit second petit côté (8") de ladite barre rectangle (6) est positionné dans une seconde encoche (14') qui est la plus éloignée de ladite face frontale du bac (3) et lesdits grands côtés (7) de ladite barre rectangle (7) sont positionnés chacun dans une première encoche (18) qui est la plus éloignée de ladite face frontale du bac (3), une seconde position d'extension où ladite barre rectangle (6) est sensiblement oblique selon laquelle ledit second petit côté (8") de ladite barre rectangle (6) est positionné dans la seconde encoche (14") qui est la plus proche de ladite face frontale du bac (3) et lesdits grands côtés (7) de ladite barre rectangle (6) sont positionnés chacun dans la première encoche (18) qui est la plus éloignée de ladite face frontale du bac (3), et d'autre part deux positions rétractées qui sont décalées angulairement l'une par rapport à l'autre avec une première position rétractée où ladite barre rectangle (6) est sensiblement verticale selon laquelle ledit second petit côté (8") de ladite barre rectangle (6) est positionné au fond de ladite première extrémité basse (15) de ladite fente (10) et lesdits grands côtés (7) de ladite barre rectangle (6) sont positionnés chacun dans une première encoche (19) qui est la plus proche de ladite face frontale du bac (3), une seconde position rétractée où ladite barre rectangle (6) est sensiblement oblique selon laquelle ledit second petit côté (8") de ladite barre rectangle (6) est positionné au fond de ladite première extrémité basse (15) de ladite fente (10) et lesdits grands côtés (7) de ladite barre rectangle (6) sont positionnés chacun dans la première encoche (18) qui est la plus éloignée de ladite face frontale du bac (3).

2. Conteneur (1) selon la revendication 1, **caractérisé en ce que** ladite barre rectangle (6) est une barre tubulaire et comporte sur les deux grands cotés (7) une section aplatie (12) adjacente à une rondelle (11) de blocage, la section aplatie (12) de la barre rectangle (6) coopérant avec la première encoche (19) qui est la plus proche de ladite face frontale du bac (3) et qui est droite pour réaliser un verrouillage par friction de ladite barre rectangle (6) occupant la première position rétractée.

3. Conteneur (1) selon la revendication 1 ou 2, **caractérisé en ce qu'**une couronne à gorge (9) est disposée sur ledit second petit coté (8") de ladite barre rectangle (6) pour coopérer avec un bord de ladite fente (10) de coulissement.

4. Conteneur selon l'une des revendications 1 à 3, **caractérisé en ce que** ladite seconde encoche (14") la plus proche de ladite face frontale du bac (3) est plus ouverte que ladite seconde encoche (14') la plus éloignée de ladite face frontale du bac (3).

## Patentansprüche

1. Rollbehälter (1) für das Transportieren und Entladen eines Materials, umfassend einen Behälter (3), der oben offen ist, und einen Griff (6), der in Bezug auf eine Vorderseite des Behälters (3) zwischen einer unteren eingeschobenen Position und einer oberen ausgezogenen Position einschiebbar und ausziehbar ist, der Behälter (1) weist eine Stange (6) in Form eines Rechtecks mit zwei langen Seiten (7) und zwei kurzen Seiten (8', 8") auf, **dadurch gekennzeichnet, dass** die zwei langen Seiten (7) der rechteckigen Stange jeweils durch eine Lasche (16) hindurchgehen, die auf der Vorderseite des Behälters (3) ausgebildet ist und zwei gegenüberliegende erste Kerben (18, 19) bildet, die mehr oder weniger weit entfernt von der Vorderseite des Behälters (3) sind, wobei die zwei kurzen Seiten (8', 8") der rechteckigen Stange (6) eine erste kurze Seite (8'), die den Griff bildet, und eine zweite kurze Seite (8") aufweisen, die in einem Gleitschlitz (10) beweglich ist, der auf der Vorderseite des Behälters (3) ausgebildet ist, wobei dieser Gleitschlitz (10) ein erstes unteres Ende (15), das in Bezug auf die Vorderseite des Behälters (3) schräg ist, und ein zweites oberen Ende aufweist, das zwei gegenüberliegende zweite Kerben (14', 14") bildet, die mehr oder weniger weit entfernt von der Vorderseite (3) sind, derart, dass der Griff (6) in der oberen ausgezogenen Position ausgelegt ist, um einerseits zwei ausgezogene Positionen, die zueinander winkelversetzt sind, mit einer ersten ausgezogenen Position, wo die rechteckige Stange (6) im Wesentlichen vertikal ist, bei der die zweite kleine Seite (8") der rechteckigen Stange (6) in einer zweiten Kerbe (14') angeordnet ist, die die von der Vorderseite des Behälters (3) am weitesten entfernte ist, und die langen Seiten (7) der rechteckigen Stange (7) jeweils in einer ersten Kerbe (18) angeordnet sind, die die von der Vorderseite des Behälters (3) am weitesten entfernte ist, mit einer zweiten ausgezogenen Position, wo die rechteckige Stange (6) im Wesentlichen schräg ist, bei der die zweite kleine Seite (8") der rechteckigen Stange (6) in der zweiten Kerbe (14") angeordnet ist, die die der Vorderseite des Behälters (3) am nächstgelegene ist, und die langen Seiten (7) der rechteckigen Stange (6) jeweils in der ersten Kerbe (18) angeordnet sind, die die von der Vorderseite des Behälters (3) am weitesten entfernte ist, und andererseits zwei eingeschobene Positionen aufzuweisen, die zueinander winkelversetzt sind, mit einer ersten eingeschobenen Position, wo die rechteckige Stange (6) im Wesentlichen vertikal ist, bei der die zweite kleine Seite (8") der rechteckigen Stange (6) am Boden des ersten unteren Endes (15) des Schlitzes (10) angeordnet ist, und die zwei langen Seiten (7) der rechteckigen Stange (6) jeweils in einer ersten Kerbe (19) angeordnet sind, die die der Vorderseite des Behälters (3) am nächstgelegene ist, mit einer zweiten eingeschobenen Position, wo die rechteckige Stange (6) im Wesentlichen schräg ist, bei der die zweite kleine Seite (8") der rechteckigen Stange (6) am Boden des ersten unteren Endes (15) des Schlitzes (10) angeordnet ist, und die zwei langen Seiten (7) der rechteckigen Stange (6) jeweils in der ersten Kerbe (18) angeordnet sind, die die von der Vorderseite des Behälters (3) am weitesten entfernte ist.

2. Behälter (1) nach Anspruch 1, **dadurch gekennzeichnet, dass** die rechteckige Stange (6) eine rohrförmige Stange ist und an den zwei langen Seiten (7) einen abgeflachten Abschnitt (12) aufweist, der an eine Sicherungsscheibe (11) angrenzend ist, wobei der abgeflachten Abschnitt (12) der rechteckigen Stange (6) mit der ersten Kerbe (19) zusammenwirkt, die die der Vorderseite des Behälters (3) am nächstgelegene ist und die gerade ist, um eine Verriegelung durch Reibung der rechteckigen Stange (6) herzustellen, die die erste eingeschobene Position einnimmt.

3. Behälter (1) nach Anspruch 1 oder 2, **dadurch gekennzeichnet, dass** ein Nutkranz (9) an der zweiten kleinen Seite (8") der rechteckigen Stange (6) angeordnet ist, um mit einem Rand des Gleitschlitzes (10) zusammenzuwirken.

4. Behälter nach einem der Ansprüche 1 bis 3, **dadurch gekennzeichnet, dass** die zweite Kerbe (14"), die die der Vorderseite des Behälters (3) am nächstgelegene ist, weiter offen ist als die zweite Kerbe (14'), die die von der Vorderseite des Behälters (3) am weitesten entfernte ist.

## Claims

1. A roll container (1) for transporting and unloading material, comprising a tray (3) open on top and a handle (6) which is retractable and extensible with respect to a front face of the tray (3) between a lower retracted position and an upper extended position, the tray (1) comprising a bar (6) in the form of rectangle with two long sides (7) and two short sides (8', 8"), **characterized in that** said two long sides (7) of said rectangular bar each pass through a lug (16) arranged on said front face of the tray (3) and form two first notches (18, 19) in opposition more or less distant from said front face of the tray (3), said two short sides (8', 8") of the rectangular bar (6) comprising a first short side (8') forming said handle and a second short side (8") which is movable in a sliding slot (10) arranged on said front face of the tray (3), this sliding slot (10) having a first low extremity (15) which is oblique with respect to said front face of the tray (3) and a second top extremity which forms two second notches (14', 14") in opposition more or less distant from said front face of the tray (3) such that said handle (6), in its upper extended position, is designed to have in one hand, two extended positions angularly offset with respect to one another with a first extended position wherein said rectangular bar (6) is substantially vertical in which said second short side (8") of said rectangular bar (6) is positioned in a second notch (14') which is furthest from said front face of the tray (3) and said long sides (7) of said rectangular bar (6) are each positioned in a first notch (18) which is furthest from said front face of the tray (3), a second extended position wherein said rectangle bar (6) is substantially oblique wherein said second short side (8") of said rectangular bar (6) is positioned in the second notch (14") which is closest to said front face of the tray (3) and said long sides (7) of said rectangular bar (6) are each positioned in the first notch (18) which is furthest from said front face of the tray (3), and secondly two retracted positions which are angularly offset with respect to one another with a first retracted position wherein said rectangular bar (6) is substantially vertical in which said second short side (8") of said rectangular bar (6) is positioned at the bottom of said first low extremity (15) of said slot (10) and said long sides (7) of said rectangular bar (6) are each positioned in a first notch (19) which is closest to said front face of the tray (3), a second retracted position wherein said rectangular bar (6) is substantially oblique wherein said second short side (8") of said rectangular bar (6) is positioned at the bottom of said first low extremity (15) of said slot (10) and said long sides (7) of said rectangular bar (6) are each positioned in the first notch (18) which is furthest from said front face of the tray (3).

2. Container (1) according to claim 1, **characterized in that** said rectangular bar (6) is a tubular bar and has on the two long sides (7) a flattened section (12) adjacent to a blocking washer (11), the flattened section (12) of the rectangular bar (6) cooperating with the first notch (19) which is closest to said front face of the tray (3) and that is straight to provide a locking by friction of said rectangular bar (6) occupying the first retracted position.

3. Container (1) according to claim 1 or 2, **characterized in that** a ring groove (9) is disposed on said second short side (8") of said rectangular bar (6) for cooperating with an edge of said sliding slot (10).

4. Container according to one of claims 1 to 3, **characterized in that** said second notch (14") closest to said front face of the tray (3) is wider than said second notch (14') furthest from said front face of the tray (3).
